# EUROPÄISCHE PATENTSCHRIFT

(11) **EP 0 485 382 B1**
(45) Veröffentlichungstag und Bekanntmachung des Hinweises auf die Patenterteilung: **28.04.1993**
(21) Anmeldenummer: 90903144.5
(22) Anmeldetag: 16.02.1990
(51) Int. Cl.: B41J 2/505, G06K 15/10

(54) **VERFAHREN ZUM ANSTEUERN VON DRUCKELEMENTEN**
PROCESS FOR DRIVING PRINTING ELEMENTS
PROCEDE POUR LA COMMANDE D'ELEMENTS D'IMPRESSION

(30) Priorität: 04.08.1989 DE 3925912
(43) Veröffentlichungstag der Anmeldung: 20.05.1992
(73) Patentinhaber: SIEMENS AKTIENGESELLSCHAFT, 80333 München (DE)
(72) Erfinder: LEHMANN, Manfred, W-8039 Puchheim (DE); SCHERDEL, Stefan, W-8000 München 70 (DE)
(74) Vertreter: Meissner, Peter E., Dipl.-Ing.
(86) Internationale Anmeldenummer: DE9000105
(87) Internationale Veröffentlichungsnummer: WO9101887

(56) Entgegenhaltungen:
- EP-A- 0 013 296
- EP-A- 0 160 318
- IBM TECHNICAL DISCLOSURE BULLETIN, vol. 27, no. 4b, September 1984, New York US page 2504; Kitamura: "Draft font generation"
- PATENT ABSTRACTS OF JAPAN, vol. 12, no. 67 (M-673)(2914) 2 March 1988; JP A 62 212 164 (YUTAKA MIYAGI) 18.09.1987

## Beschreibung

Die Erfindung betrifft ein Verfahren zum Ansteuern von Druckelementen, die als Tintentröpfchen ausstoßende Tintendruckeinrichtungen ausgebildet sind, welche in mehreren Reihen mit jeweils einer Mehrzahl von Druckelementen angeordnet sind und die zur Darstellung eines Zeichens an bestimmten Rasterpunkten innerhalb eines in Matrixform ausgebildeten Rasters Punkte erzeugen, wobei die Erzeugung der Punkte innerhalb der Matrix spaltenweise parallel zueinander erfolgt und wobei bei der Darstellung bestimmter Zeichen und Zeichengruppen eine Ausdünnung der notwendigen Rasterpunkte erfolgt, indem in jeder Spalte des Rasters jeder zweite druckbare Rasterpunkt unterdrückt wird und wobei die unterdrückten Rasterpunkte in der jeweils benachbarten Spalte um einen Rasterpunkt gegeneinander verschoben sind.

Vorgenannte Druckeinrichtungen sind beispielsweise in Tintendruckeinrichtungen vorgesehen (DE-OS 1 941 680), wobei viele Druckelemente Zeichen mit hoher Druckgeschwindigkeit auf einen Aufzeichnungsträger abdrucken. Diese Druckelemente sind beispielsweise als Tintendruckelemente ausgebildet und in Spalten und Reihen angeordnet, so daß sie ein Raster bilden. Ist ein Zeichen abzudrucken, so werden die zum Bilden dieses Zeichens notwendigen Druckelemente angesteuert, so daß in dem der Zeichenbildung zugrundegelegten Raster die entsporechenden Rasterpunkte eingefärbt werden.

Bei bestimmten Zeichendarstellungen (z.B. Near-Letter-Quality oder bei größeren Zeichenflächen zur Reduzierung der Tintenmenge) ist eine sog. Rasterausdünnung erwünscht, indem man z.B. schachbrettartig jeden zweiten druckbaren Punkt innerhalb des Rasters in jeder Spalte unterdrückt und wobei in jeder folgenden Spalte der unterdrückte Punkt um eine Zeile verschoben ist. Dabei kann es vorkommen, daß dünne Linien zerfranst erscheinen oder je nach Neigungswinkel auch verschwinden.

Um keine Informationen zu verlieren, wurde im Near-Letter-Quality-Verfahren in jeder Spalte des Rasters immer der erste zur Bildung des Zeichens vorkommende Punkt gedruckt und danach erst die Rasterausdünnung nach dem Schachbrettschema vorgenommen. Dabei kann aber eine störende Strukturierung von flächenhaften Darstellungen erfolgen, wenn die Ausgangslinie geneigt oder gekrümmt ist.

Die Aufgabe des erfindungsgemäßen Verfahrens soll nun darin bestehen, den vorgenannten Nachteil zu vermeiden und einen Informationsverlust zu vermeiden.

Dies wird dadurch erreicht, daß vor dieser Ausdünnung der notwendigen Rasterpunkte zu jedem ursprünglich zur Bildung des Zeichens vorgesehenen Rasterpunkt zusätzlich ein Rasterpunkt in der vorhergehenden Spalte in gleicher Zeile erzeugt wird und dann erst diese Ausdünnung vorgenommen wird.

Hieraus ergibt sich der Vorteil, daß nach dem schachbrettartig vorgenommenen Ausdünnungsverfahren der abzudruckenden Rasterpunkte kein Verlust wesentlicher Zeichenteile eintritt und daß insbesondere auch mit einer Neigung von 45° behaftete Zeichenteile aufgezeichnet werden.

Das Verfahren wird anhand von vier Figuren näher erläutert.

Figur 1 zeigt ein aus den einzelnen Rasterpunkten bildbares Zeichen in nicht ausgedünnter Form mit den Spalten al,bl bis a5,b5 und den Zeilen 1 bis 7, wobei die runden Kreise die Rasterpunkte darstellen.

Figur 2 zeigt das gleiche Zeichen wie in Figur 1, jedoch ausgedünnt nach dem schachbrettartigen Verfahren mit den als Kreise gezeichneten restlichen Rasterpunkten.

Figur 3 zeigt wiederum das gleiche Zeichen, jedoch mit der dem erfindungsgemäßen Verfahren entsprechenden zusätzlichen Rasterpunktbelegung in einer entsprechenden Steuereinheit vor der Ausdünnung. Dabei sind die zusätzlichen Rasterpunkte quadratisch gezeichnet.

Figur 4 zeigt das gleiche Zeichen wie in Figur 3 nach einer Ausdünnung entsprechend dem bekannten schachbrettartigen Verfahren. Dabei sind die ursprünglichen Rasterpunkte als Kreis und die aus den zusätzlichen Rasterpunkten erzeugten Punkte quadratisch gezeichnet.

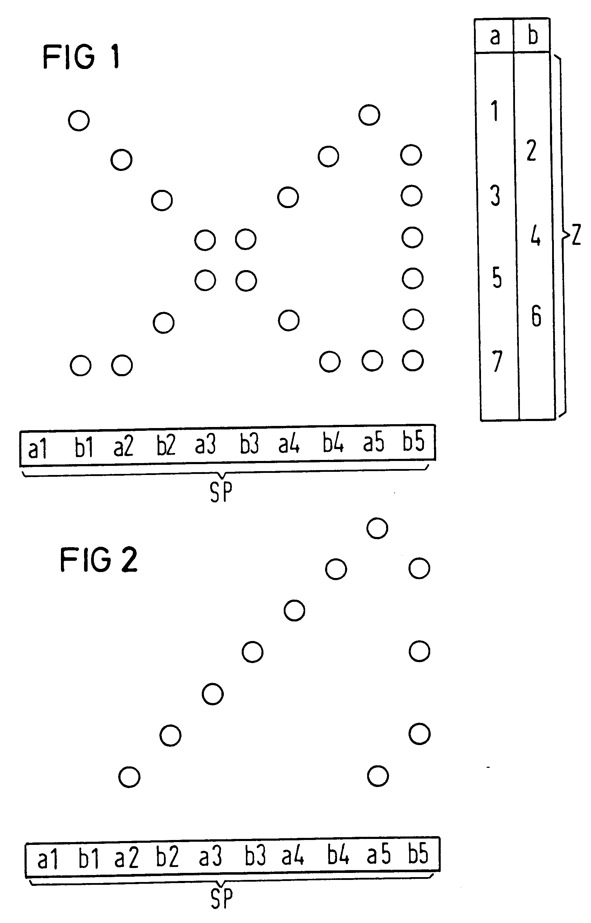

Wie aus den Figuren 1 und 2 zu entnehmen ist, fallen bei der Ausbildung eines Zeichens vor allem bei bestimmten Schräglagen von Zeichenteilen bei einer Rasterausdünnung nach dem bekannten Verfahren unter Umständen soviel wesentliche Rasterpunkte aus, daß das Zeichen als solches nicht mehr eindeutig erkennbar ist.

In Spalte bl wird beispielsweise in Zeile 1,3,5 und 7 gar kein Rasterpunkt eingefärbt. In den Spalten a2,b3,a3,b3, a4,b4 wird nur jeweils ein Rasterpunkt eingefärbt, so daß die von links oben nach rechts unten verlaufende Zeichenlinie ganz verschwindet (Figur 2).

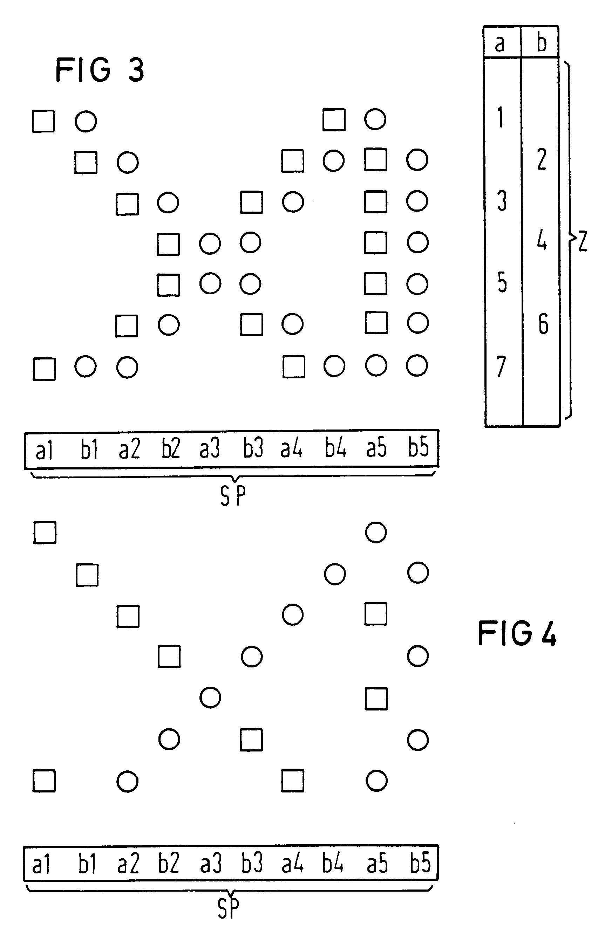

Nach Figur 3 wird nun erfindungsgemäß jeder Rasterpunkt der zur Darstellung des nicht ausgedünnten Zeichens nach Figur 1 in der vorhergehenden Spalte und der gleichen Zeile ein weiterer Rasterpunkt zugeordnet (in der nicht dargestellten Steuereinheit). Wird jetzt eine Ausdünnung nach dem schachbrettartigen Verfahren vorgenommen, dann ergibt sich die Zeichenbildung nach Figur 4. Bei der Bestimmung der Rasterpunkte in den Spalten al bis b5 nach der Zeilenauswahl 1,3,5,7 und danach 2,4,6 ergeben sich ausreichend viele und gut verteilte abzudruckende Rasterpunkte, um das Zeichen zu erkennen. Es können also auch dünne Linien unter z.B. 45° Neigung nicht mehr verlorengehen und ein eventuell auftretender Punkteverlust wird bei hoher Auflösung nicht störend erkennbar sein.

## Patentansprüche

1. Verfahren zum Ansteuern von Druckelementen, die als Tintentröpfchen ausstoßende Tintendruckeinrichtungen ausgebildet sind, welche in mehreren Reihen mit jeweils einer Mehrzahl von Druckelementen angeordnet sind und die zur Darstellung eines Zeichens an bestimmten Rasterpunkten innerhalb eines in Matrixform ausgebildeten Rasters Punkte erzeugen, wobei die Erzeugung der Punkte innerhalb der Matrix spaltenweise parallel zueinander erfolgt und wobei bei der Darstellung bestimmter Zeichen und Zeichengruppen eine Ausdünnung der notwendigen Rasterpunkte erfolgt, indem in jeder Spalte des Rasters jeder zweite druckbare Rasterpunkt unterdrückt wird und wobei die unterdrückten Rasterpunkte in der jeweils benachbarten Spalte um einen Rasterpunkt gegeneinander verschoben sind,
**dadurch gekennzeichnet,** daß vor dieser Ausdünnung der notwendigen Rasterpunkte zu jedem ursprünglich zur Bildung des Zeichens vorgesehenen Rasterpunkt zusätzlich ein Rasterpunkt in der vorhergehenden Spalte in gleicher Zeile erzeugt wird und dann erst diese Ausdünnung vorgenommen wird.

## Claims

1. A method of driving printing elements which have the form of ink-jet printing devices which eject ink drops, are arranged in a plurality of rows each comprising a plurality of printing elements, and which, for the representation of a character, generate dots at specific matrix points within a matrix-like grid, wherein the generation of the dots within the matrix takes place column by column in parallel fashion and wherein, for the representation of specified characters and groups of characters, the necessary matrix points are thinned in that in each column of the matrix every second printable matrix point is suppressed and wherein the suppressed matrix points in the respective adjacent column are mutually offset by one matrix point, characterised in that prior to this thinning of the necessary matrix points, in addition to each matrix point originally provided for the formation of the character one matrix point is generated in the preceding column in the same row and only then is this thinning carried out.

## Revendications

1. Procédé pour l'amorçage d'éléments d'impression, qui sont réalisés en tant que dispositifs d'impression à encre éjectant des gouttes d'encre, lesquels sont agencés en plusieurs rangées, avec, à chaque fois, une multitude d'éléments d'impression et qui, pour la représentation d'un signe, engendrent des points en des points de trame déterminés à l'intérieur d'un réseau réalisé en forme de matrice, la génération des points à l'intérieur de la matrice s'effectuant par colonnes parallèles et, pour la représentation de signes et de groupes de signes déterminés, une réduction des points de trame nécessaires étant effectuée, en ce que, dans chaque colonne du réseau, chaque second point de trame pouvant être imprimé est retiré et, dans chacune des colonnes voisines, les points de trame retirés étant déplacés les uns par rapport aux autres d'un point de trame, caractérisé en ce que, avant cette réduction des points de trame nécessaires, pour chaque point de trame prévu initialement pour la formation du signe, un point de trame supplémentaire est engendré dans la colonne précédente dans la même ligne et seulement alors cette réduction est effectuée.
